# EUROPÄISCHE PATENTSCHRIFT

(11) **EP 4 010 617 B1**
(45) Veröffentlichungstag und Bekanntmachung des Hinweises auf die Patenterteilung: **02.10.2024**
(21) Anmeldenummer: 20753315.9
(22) Anmeldetag: 03.08.2020
(51) Int. Cl.: F16L 33/08, F16L 59/18, F16L 3/123, F16L 57/04

(54) **SCHELLENANORDNUNG MIT EINER HITZESCHUTZEINRICHTUNG**
CLAMP ASSEMBLY WITH A HEAT PROTECTION DEVICE
ENSEMBLE DE SERRAGE DOTÉ D'UN DISPOSITIF DE PROTECTION THERMIQUE

(30) Priorität: 08.08.2019 DE 102019121432
(43) Veröffentlichungstag der Anmeldung: 15.06.2022
(73) Patentinhaber: NORMA Germany GmbH, 63477 Maintal (DE)
(72) Erfinder: KRÄMER, Markus, 63477 Maintal (DE); GEPPERT, Helmut, 63477 Maintal (DE); LANTSMANN, Natan, 63477 Maintal (DE)
(74) Vertreter: Patentanwälte Olbricht Buchhold Keulertz
(86) Internationale Anmeldenummer: PCT/EP2020/071795
(87) Internationale Veröffentlichungsnummer: WO 2021/023704

(56) Entgegenhaltungen:
- WO-A1-01/81814
- DE-U1- 202016 002 955
- FR-A1- 2 881 054

## Beschreibung

Die Erfindung betrifft eine Schellenanordnung, aufweisend eine Schelle mit einem Schellenband und mit einer Spanneinrichtung zum Spannen des Schellenbandes, und aufweisend eine Hitzeschutzeinrichtung mit einem Gehäuse und mit mindestens einer Isolationseinlage, wobei das Gehäuse an seinen axialen Stirnseiten jeweils eine in Abschnitte unterteilte und radial nach innen ragende Wand aufweist, wobei die mindestens eine Isolationseinlage zwischen den Wänden des Gehäuses positionierbar ist.

In unterschiedlichen technischen Bereichen werden Schellen zum Verbinden von Schläuchen oder Rohren eingesetzt. Insbesondere können Schellen dazu eingesetzt werden, Schläuche oder Rohre an entsprechenden Stutzen zu arretieren und somit ein Austreten eines Fluids zu vermeiden. Ein derartiges Fluid kann beispielsweise ein Heizfluid oder ein Kühlmittel sein. Insbesondere durch metallische Schellen und Verbinder von Schläuchen kann eine hohe Wärmemenge des Fluids an eine Umgebung oder benachbarte Komponenten abgegeben werden. Durch einen unkontrollierten Wärmeverlust kann die Effizienz von Systemen beeinträchtigt werden.

Des Weiteren kann eine Schelle aufgrund einer hohen Fluidtemperatur ebenfalls stark erhitzt sein und somit eine potentielle Gefahr für benachbarte nicht hitzeresistente Komponenten darstellen.

Üblicherweise erfolgt die Anbringung von einem Hitzeschutz an derartigen Schellen und Verbindungspunkten nach einer Montage der jeweiligen Schellen. An Verbindungspunkten zwischen zwei Rohren kann ein Hitzeschutz unkompliziert angeordnet werden. Die Anordnung von einem Hitzeschutz an Schellen kann aufgrund der variierenden Form problematisch sein.

WO 01/81814 A1 offenbart beispielsweise eine Rohrschelle zum Verbinden oder Reparieren von Rohren mit einer Dichtmanschette und einem Gehäuse. Zum Schutz gegen Feuereinwirkungen ist auf der Außenseite der Kupplung mit einer intumeszierende Brandschutzbeschichtung versehen.

DE 20 2016 002 955 U1 betrifft ebenfalls eine Haltevorrichtung für zu verbindende Rohrenden.

Die Haltevorrichtung bzw. Rohrschelle dient bspw. Zum Verbinden einer Isolierung an einer V-Band-Schelle oder an einer Verbindungseinrichtung.

Aufgabe der Erfindung ist es daher, eine Schellenanordnung mit einer Hitzeschutzeinrichtung bereitzustellen, welche einen reduzierten Montageaufwand aufweist.

Die Erfindung wird durch den Anspruch 1 definiert.

Ausgestaltungen sind Gegenstand der Ansprüche 2 bis 9.

Die Erfindung betrifft eine Schellenanordnung, welche eine Schelle mit einem Schellenband und mit einer Spanneinrichtung zum Spannen des Schellenbandes sowie eine Hitzeschutzeinrichtung aufweist.

Die Hitzeschutzeinrichtung weist ein Gehäuse und mindestens eine Isolierschicht bzw. eine Isolierlage auf. Das Gehäuse weist an seinen axialen Stirnseiten jeweils eine in Abschnitte unterteilte und radial nach innen ragende Wand auf. Insbesondere kann das Gehäuse zumindest teilweise ringförmig ausgeprägt sein und an einer Außenseite im Wesentlichen geschlossen sein. An einer Innenseite kann das Gehäuse offen ausgeführt sein.

Die mindestens eine Isolierschicht bzw. Isolationseinlage ist zwischen den Wänden des Gehäuses positionierbar. Die Schelle ist durch das Gehäuse und/oder die mindestens eine Isolierschicht der Hitzeschutzeinrichtung zumindest bereichsweise umgreifbar, wobei die Hitzeschutzeinrichtung mit der Schelle verbindbar ausgeführt ist.

Die Hitzeschutzeinrichtung hüllt die Schelle um.

Die Hitzeschutzeinrichtung weist ein sich umfangsseitig erstreckendes Gehäuse mit zwei Wänden auf, welche in radialer Richtung abstehend ausgeformt sind. Des Weiteren weist die Hitzeschutzeinrichtung mindestens eine in das Gehäuse einsetzbare Isolierschicht auf, wobei die mindestens eine Isolierschicht direkt oder über mindestens ein Abstandselement in das Gehäuse einsetzbar ist.

Das Gehäuse der Hitzeschutzeinrichtung kann vorzugsweise aus einem blechförmigen Material, beispielsweise durch Stanzen und Biegen, herstellbar sein. Insbesondere kann das Gehäuse aus eine Metall oder einem hitzeresistenten Kunststoff bestehen. Das Gehäuse weist eine Umfangswand und zwei Wände, welche von der Umfangswand in radialer Richtung abstehen. Im montierten Zustand der Hitzeschutzeinrichtung bildet das Gehäuse ein U-förmiges Profil aus, welches nach Außen durch die Umfangswand verschlossen ist. An der offenen Seite des Gehäuses kann ein oder mehrere Isolationsschichten in das U-förmige Profil bzw. zwischen die Wände des Gehäuses eingelegt werden. Durch das U-förmige Profil wird ein Aufnahmeraum des Gehäuses ausgebildet, welcher bereichsweise durch die Wände und die Umfangswand begrenzt ist.

Die Wände des Gehäuses sind in Abschnitte unterteilt, welche durch Aussparungen voneinander beabstandet sein können. Die Aussparungen bzw. die Abschnitte sind hierbei derart geformt, dass das Gehäuse umfangsseitig um eine Schelle positioniert werden kann. Insbesondere können die Abschnitte mit zunehmendem Abstand von der Umfangswand verjüngende Form aufweisen, wodurch sich das Gehäuse an eine im Wesentlichen rund geformte Schelle umfangsseitig anschmiegen kann.

Die Wände können vorzugsweise eine Länge aufweisen, welche ein Aufnehmen von einer oder mehrere Isolierschichten sowie der Schelle ermöglicht. Durch eine ausreichende Länge der Wände kann ein Komprimieren der mindestens einen Isolierschicht und damit eine Beeinträchtigung der Isolierwirkung vermieden werden. Ein oder mehrere Abschnitte der Wand können länger ausgestaltet sein, um eine Verbindung mit der Schelle durch endseitiges Umbiegen der verlängerten Abschnitte herzustellen. Die Schelle kann vorzugsweise als letzte Komponente bzw. Schicht in das offene Profil des Gehäuses aufnehmbar und bereichsweise durch die verlängerten biegbaren Flanken bzw. Abschnitte abschließbar sein.

Alternativ oder zusätzlich kann die Schelle eine axiale Ausdehnung aufweisen, welche im Wesentlichen einer axialen Ausdehnung des Aufnahmeraums des Gehäuses entspricht. Hierdurch kann die Schelle als Abschluss des Aufnahmeraums in das Gehäuse eingepresst oder mittels Rastverbindungen formschlüssig mit dem Gehäuse der Hitzeschutzeinrichtung verbunden werden.

Die Isolierschicht kann beispielsweise aus einem intumeszierenden Material bestehen. Vorzugsweise kann die mindestens eine Isolierschicht als ein Flammenschutz dienen. Hierzu kann die mindestens eine Isolierschicht der Hitzeschutzeinrichtung eine möglichst geringe Wärmeleitfähigkeit aufweisen. Die Isolierschicht kann als eine Mineralfasermatte oder als eine mikroporöse Materialdämmung ausgestaltet sein. Die mindestens eine Isolierschicht kann formschlüssig oder stoffschlüssig mit dem Gehäuse verbunden sein, sodass die Hitzeschutzeinrichtung als eine quasi einteilige Komponente bei der Montage der Schellenanordnung gehandhabt werden kann.

Durch den Einsatz der Hitzeschutzeinrichtung über der Schelle kann die Wärmemenge im System verbleiben oder von dem System ferngehalten werden. Somit kann die Hitzeschutzeinrichtung bidirektional wärmedämmend wirken. Insbesondere kann ein der Schelle benachbartes Umfeld vor hohen oder tiefen Temperaturen der Schelle geschützt und Beschädigungen oder Brandgefahr vermieden werden.

Eine derartige Hitzeschutzeinrichtung kann integral mit einer neuen Schelle hergestellt und als eine einteilige Schellenanordnung bereitgestellt werden. Alternativ oder zusätzlich kann die Hitzeschutzeinrichtung als eine Nachrüstlösung ausgeführt und an bestehende bzw. montierte Schellen montierbar sein. Hierzu kann das Gehäuse der Hitzeschutzeinrichtung umfangsseitig um eine montierte Schelle geführt und endseitig an einem Verschlussabschnitt der Hitzeschutzeinrichtung fixiert werden. Der Verschlussabschnitt kann optional ausgeführt sein, wenn die Hitzeschutzeinrichtung umfangsseitig gleichmäßig an der Schelle befestigt werden kann.

Die Form und die Abmessungen des Gehäuses können hierbei an unterschiedliche Schellen anpassbar und/oder universell an eine Vielzahl an Schellen angepasst ausgeführt sein. Beispielsweise kann die Hitzeschutzeinrichtung eine einstellbare Länge aufweisen, wodurch unterschiedlich große Schellen mit der Hitzeschutzeinrichtung ausrüstbar sind.

Bei einer einteiligen Ausführung der Schellenanordnung kann der Montageaufwand der Schelle und der Hitzeschutzeinrichtung reduziert werden. Insbesondere können durch die Hitzeschutzeinrichtung auch bestehende Schellen und Verbinder nachgerüstet werden.

Eine Hitzeschutzeinrichtung ist erfindungsgemäß derart ausgestaltet, dass Sie formschlüssig mit der Schelle verbunden ist. Beispielsweise kann die Hitzeschutzeinrichtung am Gehäuse positionierte Flanken aufweisen, welche um die Schelle umbiegbar sind. Hierdurch kann eine formschlüssige Verbindung zwischen der Schelle und dem Gehäuse der Hitzeschutzeinrichtung hergestellt werden. Des Weiteren kann das Gehäuse der Hitzeschutzeinrichtung zumindest bereichsweise eine Form aufweisen, welche eine Rastverbindung mit einem Abschnitt der Schelle, wie beispielsweise dem Schellenband, eingehen kann.

Alternativ oder zusätzlich kann die Hitzeschutzeinrichtung durch Stanzen, Durchsetzfügeverbindung, Reibschluss, Klebemittel, Klebebänder und dergleichen mit der Schelle verbindbar sein.

Insbesondere können Aussparungen an den Wänden der Hitzeschutzeinrichtung vorgesehen sein, in welche seitlich angeordnete Rastnasen der Schelle formschlüssig einsetzbar sind. Hierdurch kann die Schelle parallel zu der mindestens einen Isolierschicht zwischen den Wänden des Gehäuses angeordnet werden. Insbesondere kann die Schelle bzw. zumindest das Schellenband der Schelle parallel zu der Umfangswand und der mindestens einen Isolierschicht verlaufen. Die Schelle kann somit die offene U-Form des Gehäuses zumindest abschnittsweise verschließen.

Das Gehäuse kann weiterhin mindestens eine Aussparung aufweisen, welche zum Aufnehmen der Spanneinrichtung der Schelle dient. Hierdurch kann die Schelle trotz der angeordneten Hitzeschutzeinrichtung montiert werden.

Die Hitzeschutzeinrichtung ist zum Herstellen der formschlüssigen Verbindung mit der Schelle erfindungsgemäß biegbar ausgeführt. Vorzugsweise ist mindestens ein Abschnitt des Gehäuses zum Herstellen einer formschlüssigen Verbindung mit der Schelle biegbar ausgeführt ist. Hierzu ist erfindungsgemäß vorgesehen, dass mindestens ein Abschnitt der Gehäusewand länger ausgestaltet ist als die übrigen Abschnitte der Wände. Der verlängerte Abschnitt ist erfindungsgemäß entlang einer Linie biegbar, wodurch eine umbiegbare Haltezunge ausgebildet wird.

Gemäß einer weiteren Ausführungsform weist die Hitzeschutzeinrichtung eine mit dem Gehäuse verbindbare Gehäuseschelle zum Verbinden der Hitzeschutzeinrichtung mit der Schelle auf. Die Gehäuseschelle kann beispielsweise eine Schlauchschelle oder Schwerlastschelle sein, welche ein Schellenband, zwei endseitig am Schellenband angeordnete Spannbacken und eine Spannschraube zum Einstellen eines Abstands zwischen den Spannbacken der Gehäuseschelle aufweisen. Die Gehäuseschelle kann an einer Außenseite der Umfangswand des Gehäuses zumindest bereichsweise befestigt sein.

Die Gehäuseschelle kann vorzugsweise dazu eingesetzt werden, die Hitzeschutzeinrichtung um eine Schelle anzuordnen und über der Schelle optimal zu arretieren.

Die Gehäuseschelle kann besonders flexibel an der Umfangswand des Gehäuses anbringbar sein, wenn die Gehäuseschelle mit dem Gehäuse durch mindestens einen Schweißpunkt, Rastverbindung, Stanzpunkt und/oder mindestens einen Durchsetzfügepunkt verbunden ist.

Nach einem weiteren Ausführungsbeispiel weist das Gehäuse an seiner radial äußeren Seite mindestens einen Führungsabschnitt zum Aufnehmen und Führen eines Schellenbands der Gehäuseschelle auf. Hierdurch kann die Gehäuseschelle formschlüssig mit dem Gehäuse verbunden sein. Insbesondere kann das Schellenband der Gehäuseschelle durch die Führungsabschnitte geführt sein. Die Führungsabschnitte können als ausgestanzte Abschnitte bzw. Laschen ausgeführt sein, welche radial aus der Umfangswand des Gehäuses bereichsweise hinausragen und einen Führungstunnel zum Aufnehmen des Schellenbandes ausbilden.

In dem Aufnahmeraum der Hitzeschutzeinrichtung kann mindestens eine zusätzliche isolierende Luftschicht eingebracht werden, wenn die Hitzeschutzeinrichtung mindestens ein Abstandselement aufweist. Das Abstandselement ist beispielsweise als eine Lasche, eine Wulst und/oder als eine Materialeinlage ausgestaltet. Hierdurch kann das mindestens eine Abstandelement flexibel und der jeweiligen Anwendung der Hitzeschutzeinrichtung entsprechend ausgeführt sein. Durch das Einbringen einer isolierenden Luftschicht kann die Wärmedämmung der Hitzeschutzeinrichtung mit minimalem Materialaufwand verbessert werden.

Derartige Abstandselemente können beispielsweise zwischen der Isolierschicht und der Schelle oder zwischen der Isolierschicht und der Umfangswand des Gehäuses angeordnet sein. Des Weiteren kann sowohl zwischen der Isolierschicht und der Schelle und zwischen der Schelle und der Isolierschicht eine Luftschicht durch den Einsatz von Abstandselementen eingestellt werden. Die Stärke der Luftschicht kann entsprechend der Ausdehnung der Abstandselemente in radialer Richtung flexibel eingestellt werden. Die verwendeten Abstandselemente können gleiche oder unterschiedliche Abmessungen aufweisen. Insbesondere kann durch den Einsatz von Abstandselementen die Wärmedämmung der Hitzeschutzeinrichtung in Umfangsrichtung variabel ausgestaltet sein. Beispielsweise kann eine Hälfte der Hitzeschutzeinrichtung eine zusätzliche Luftschicht aufweisen. Hierdurch können bestimmte Bereiche effektiver gegen Hitzeeinwirkung abgeschirmt werden.

Das mindestens eine Abstandselement kann vorzugsweise in radialer Richtung und/oder in axialer Richtung zum Einstellen von Luftschichten innerhalb der Schellenanordnung verwendet werden. Somit kann eine Wärmeübertragung durch die Hitzeschutzeinrichtung auch in axialer Richtung vermindert werden.

Nach einer weiteren Ausführungsform ist das mindestens eine Abstandselement an der Schelle und/oder an dem Gehäuse und/oder an mindestens einer Isolierschicht anbringbar. Somit kann das mindestens eine Abstandselement vielseitig innerhalb der Schellenanordnung angeordnet werden. Beispielsweise können Abstandselemente bereits bei der Herstellung der Schelle oder des Gehäuses in Form von Ausstanzungen oder Biegelaschen eingebracht werden.

Gemäß einem weiteren Ausführungsbeispiel ist durch das mindestens eine Abstandselement mindestens ein Luftspalt in radialer Richtung zwischen der Schelle und mindestens einer Isolierschicht, zwischen der mindestens einen Isolierschicht und einer Innenseite des Gehäuses, zwischen zwei Isolierschichten und/oder in axialer Richtung zwischen der Schelle und den Wänden des Gehäuses, zwischen der mindestens einen Isolierschicht und den Wänden des Gehäuses und/oder zwischen zwei Isolierschichten ausbildbar. Hierdurch kann das mindestens eine Abstandselement abhängig von den Anforderungen flexibel eingesetzt werden, um die thermischen Eigenschaften der Hitzeschutzeinrichtung zu beeinflussen. Es kann somit auch die Dicke der Schellenanordnung gezielt eingestellt bzw. gesteuert werden.

Die Hitzeschutzeinrichtung kann besonders passgenau und schnell an einer Schelle montiert werden, wenn die Hitzeschutzeinrichtung mindestens eine Ausbeulung zum Aufnehmen der Spanneinrichtung der Schelle aufweist. Die Schelle kann hierbei eine beliebige Schelle sein. Beispielsweise kann die Schelle als eine Profilschelle, Rohrschelle, Schlauchschelle, Befestigungsschelle und dergleichen ausgestaltet sein.

Nach einer weiteren Ausführungsform weist die Hitzeschutzeinrichtung zumindest einen endseitig am Gehäuse angeordneten Überlappungsabschnitt auf. Gemäß einer vorteilhaften Ausgestaltung ist der Überlappungsabschnitt dazu eingerichtet, im zusammengebauten Zustand der Schellenanordnung den zweiten endseitigen Abschnitt des Gehäuses zu überdecken und/oder zu berühren. Hierdurch kann im geschlossenen Zustand der Schellenanordnung ein von der Schellenanordnung umgriffenes Rohr oder Bauteil vollständig von der Hitzeschutzeinrichtung bedeckt werden. Insbesondere kann durch den Überlappungsabschnitt eine umfangsseitig vollständige Hitzeschutzwirkung erzielt werden.

Bevorzugterweise kann der Überlappungsabschnitt integral mit dem Gehäuse ausgeführt sein. Alternativ kann der Überlappungsabschnitt am Gehäuse und/oder an dem Schellenband befestigbar sein. Der Überlappungsabschnitt kann den zweiten endseitigen Abschnitt des Gehäuses beispielsweise seitlich oder innenseitig überlappen und somit einen unterbrechungsfreien Hitzeschutz gewährleisten.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 eine perspektivische Darstellung eines Gehäuses einer Hitzeschutzeinrichtung gemäß einer Ausführungsform,
Fig. 2 eine Seitenansicht auf eine Schellenanordnung gemäß einer Ausführungsform,
Fig. 3 eine Draufsicht auf eine Hitzeschutzeinrichtung gemäß einer Ausführungsform,
Fig. 4 eine Seitenansicht der Hitzeschutzeinrichtung aus Fig. 3,
Fig. 5 eine Draufsicht auf eine Hitzeschutzeinrichtung gemäß einer weiteren Ausführungsform,
Fig. 6 eine Seitenansicht der Hitzeschutzeinrichtung aus Fig. 5,
Fig. 7 eine Draufsicht auf eine Hitzeschutzeinrichtung gemäß einer weiteren Ausführungsform,
Fig. 8 eine Seitenansicht der Hitzeschutzeinrichtung aus Fig. 7,
Fig. 9 einen Querschnitt A-A aus Fig. 8 zum Veranschaulichen eines Führungsabschnitts,
Fig.10 - 18 Querschnitte B-B aus Fig. 2 zum Veranschaulichen der möglichen Ausgestaltungen einer Hitzeschutzeinrichtung,
Fig. 19 eine Seitenansicht auf eine Schellenanordnung mit einem Überlappungsabschnitt gemäß einer Ausführungsform und
Fig. 20 eine Seitenansicht auf eine Schellenanordnung mit einem Überlappungsabschnitt gemäß einer weiteren Ausführungsform.

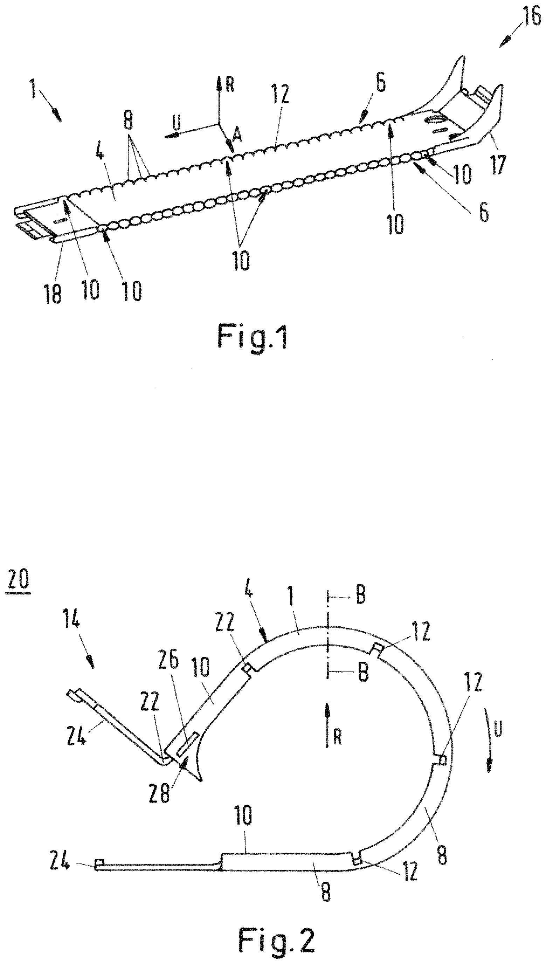

In der Fig. 1 ist eine perspektivische Darstellung eines Gehäuses 1 einer Hitzeschutzeinrichtung 2 gemäß einer Ausführungsform dargestellt. Das Gehäuse 1 weist eine Umfangswand 4 auf, welche sich in Umfangsrichtung U erstreckt. Zu beiden Seiten der Umfangswand 4 sind ist jeweils eine Wand bzw. Seitenwand 6 des Gehäuses 1 als Verlängerung der Umfangswand 4 in axialer Richtung A ausgestaltet. Die Wände 6 sind gegenüber der Umfangswand 4 in radialer Richtung R umgebogen und bilden gemäß dem Ausführungsbeispiel einen rechten Winkel zur Umfangswand 4 aus.

Die Wände 6 des Gehäuses 1 sind in Abschnitte 8, 10 unterteilt, welche durch Aussparungen 12 voneinander beabstandet sein können. Die Aussparungen 12 bzw. die Abschnitte 8, 10 sind hierbei derart geformt, dass das Gehäuse 1 umfangsseitig um eine Schelle 14 positioniert werden kann. Insbesondere können die Abschnitte 8, 10 mit zunehmendem Abstand von der Umfangswand 4 eine sich verjüngende Form aufweisen, wodurch sich das Gehäuse 1 an eine im Wesentlichen rund geformte Schelle 14 umfangsseitig anschmiegen kann.

Ein oder mehrere Abschnitte 10 der Wand 6 können länger ausgestaltet sein, um eine Verbindung mit der Schelle 14 durch endseitiges Umbiegen der verlängerten Abschnitte 10 herzustellen.

Das Gehäuse 1 weist einen Verschlussabschnitt 16 auf, welcher durch ein formschlüssiges Zusammenwirken von endseitigen Abschnitten 17, 18 ausgebildet ist. Der Verschlussabschnitt 16 kann an eine Form der Schelle 14 anpassbar sein. Insbesondere kann mittels des Verschlussabschnitts 16 eine Länge des Gehäuses 1 eingestellt werden.

Die Fig. 2 zeigt eine Seitenansicht auf eine Schellenanordnung 20 gemäß einer Ausführungsform. Die Schellenanordnung 20 weist eine Schelle 14 mit einem Schellenband 22 und mit einer Spanneinrichtung 24 zum Spannen des Schellenbandes 22 auf. Die Spanneinrichtung 24 ist hier schematisch dargestellt und ist als ein am Schellenband 22 endseitig angeordneter Einrastverschluss ausgestaltet.

Das Gehäuse 1 weist gemäß dem Ausführungsbeispiel seitlich in die Wände 6 eingebrachte Rastnuten 26 auf. Das Schellenband 22 weist zur jeweiligen Rastnut 26 korrespondierende Rastnasen 28 auf, welche in die Rastnuten 26 einsetzbar sind. Hierdurch kann die Schelle 14 an dem Gehäuse 1 ortsfest arretiert werden.

Durch die Seitenansicht werden die umgeklappten verlängerten Abschnitte 10 der Wände 6 veranschaulicht. Dabei weisen die verlängerten Abschnitte 10 im umgebogenen Zustand eine gleiche Länge wie die übrigen Abschnitte 8 der Wand 6 auf.

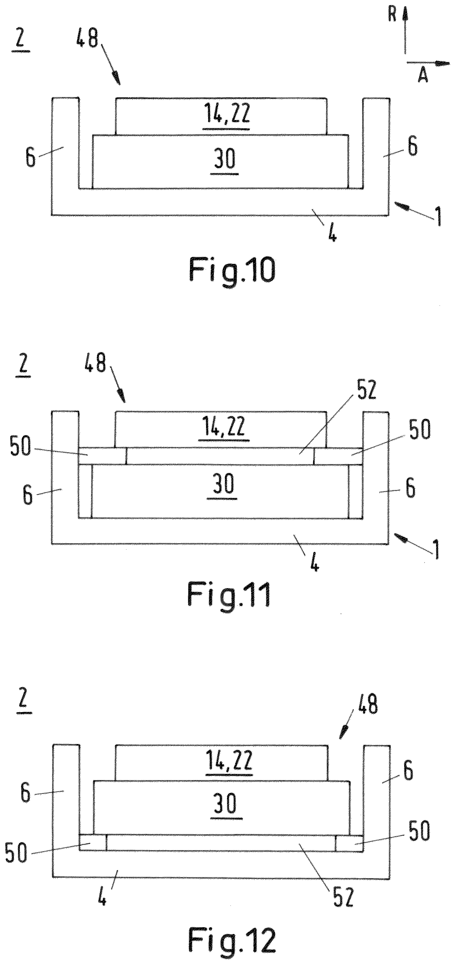

Der Übersicht halber ist ein Aufnahmeraum mit mindestens einer Isolationsschicht in der Fig. 2 nicht dargestellt. Eine detaillierte Ausführung hierzu erfolgt in den Fig. 10 - 18, welche einen Schnitt B-B der Fig. 2 zeigen.

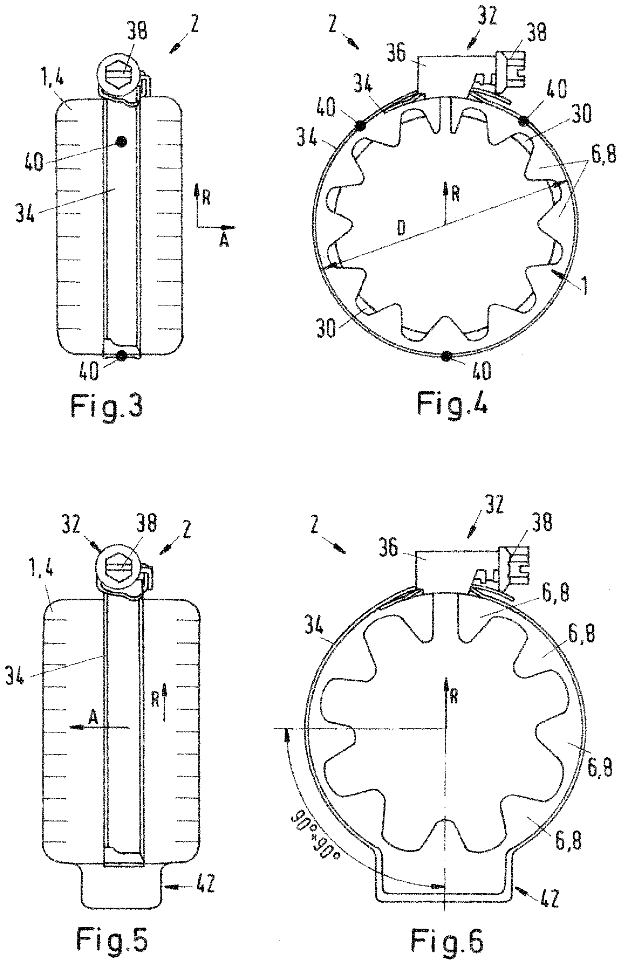

Die Fig. 3 zeigt eine Draufsicht auf eine Hitzeschutzeinrichtung 2 gemäß einer Ausführungsform. Eine entsprechende Seitenansicht hierzu ist in der Fig. 4 dargestellt. Die Hitzeschutzeinrichtung 2 weist ein Gehäuse 1 und eine im Gehäuse 1 angeordnete Isolationsschicht 30 auf.

Gemäß der dargestellten Ausführungsform weist die Hitzeschutzeinrichtung 2 eine mit dem Gehäuse 1 verbindbare Gehäuseschelle 32 zum Verbinden der Hitzeschutzeinrichtung 2 mit der Schelle 14 auf.

Die Gehäuseschelle 32 ist beispielhaft als eine Schlauchschelle ausgeführt. Die Gehäuseschelle 32 weist ein Schellenband 34 und eine Spanneinrichtung 36 mit einer Spannschraube 38 auf, welche mit einem ins Schellenband 34 geprägten Gewinde zusammenwirkt. Durch das Betätigen der Spanneinrichtung 36 kann ein Durchmesser D der Hitzeschutzeinrichtung 2 auf unterschiedlich große Schellen 14 eingestellt werden.

Die Gehäuseschelle 32 ist über drei als Schweißpunkte ausgeprägte Verbindungspunkte 40 mit der Umfangswand 4 des Gehäuses 1 verbunden. Die Verbindungspunkte 40 können auch als Durchsetzfügepunkte, Klebepunkte, Stanzpunkte und dergleichen ausgeformt sein.

In der Fig. 5 ist eine Draufsicht auf eine Hitzeschutzeinrichtung 2 gemäß einer weiteren Ausführungsform gezeigt. Die entsprechende Seitenansicht der Hitzeschutzeinrichtung 2 ist in der Fig. 6 veranschaulicht. Die Verbindungspunkte 40 und die Isolationsschicht 30 sind hier der Übersicht halber nicht dargestellt. Im Unterschied zu den bereits gezeigten Ausführungsformen, weist die Hitzeschutzeinrichtung 2 hier eine Ausbeulung 42 zum Aufnehmen der Spanneinrichtung 24 der Schelle 14 auf.

Die Ausbeulung 42 ist der Spanneinrichtung 36 der Gehäuseschelle 32 um 180° verdreht, sodass die Spanneinrichtung 24 der Schelle 14, welche durch die Hitzeschutzeinrichtung 2 gedämmt wird, nicht beeinträchtigt ist.

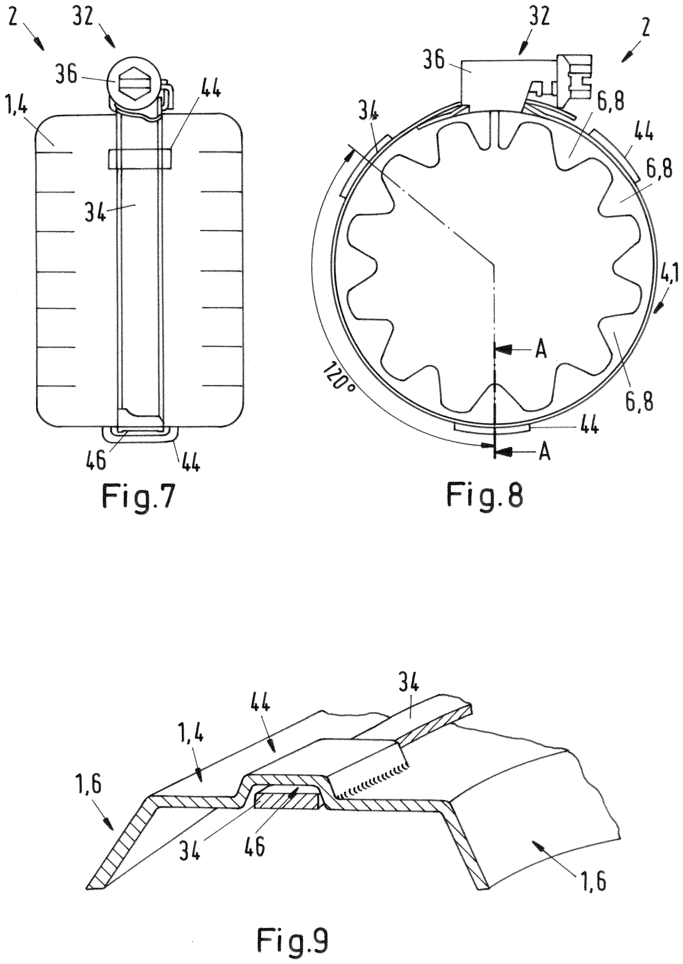

Die Fig. 7 und Fig. 8 zeigen eine Hitzeschutzeinrichtung 2 gemäß einer weiteren Ausführungsform aus unterschiedlichen Perspektiven. Im Unterschied zu den bereits gezeigten Ausführungsbeispielen, ist die Gehäuseschelle 32 mit Hilfe von Führungsabschnitten 44 an dem Gehäuse 1 angeordnet. Die Fig. 9 zeigt hierzu einen Querschnitt A-A, welcher die Ausprägung der Führungsabschnitte 44 verdeutlicht.

Das Gehäuse 1 an seiner radial äußeren Seite bzw. Umfangsseite 4 drei Führungsabschnitte 44 zum Aufnehmen und Führen des Schellenbandes 34 der Gehäuseschelle 32 auf.

Hierdurch kann die Gehäuseschelle 32 formschlüssig mit dem Gehäuse 1 verbunden sein. Insbesondere kann das Schellenband 34 der Gehäuseschelle 32 durch die Führungsabschnitte geführt sein. Die Führungsabschnitte 44 können als ausgestanzte Abschnitte bzw. Laschen ausgeführt sein, welche radial aus der Umfangswand 4 des Gehäuses 1 bereichsweise hinausragen und einen Führungstunnel 46 zum Aufnehmen des Schellenbandes 34 ausbilden.

In den Fig.10 - 18 sind schematische Querschnitte B-B aus Fig. 2 zum Veranschaulichen der möglichen Ausgestaltungen einer Hitzeschutzeinrichtung 2 dargestellt. Es ist insbesondere ein Aufnahmeraum 48 der Hitzeschutzeinrichtung 2 gezeigt. Der Aufnahmeraum 48 wird durch die seitlichen Wände 6 des Gehäuses 1 und die Umfangswand 4 ausgebildet. Der Aufnahmeraum 48 weist hier ein U-förmiges Profil auf.

Bei einer ersten beispielhaften Ausgestaltung, welche in Fig. 10 gezeigt ist, ist der Aufnahmeraum 48 mit einer Isolierungsschicht 30 gefüllt. Der Aufnahmeraum 48 wird durch das Schellenband 22 der Schelle 14 geschlossen.

In der Fig. 11 ist ein Beispiel dargestellt, bei dem eine zusätzliche isolierende Luftschicht 52 eingebracht ist. Hierzu weist die Hitzeschutzeinrichtung 2 mindestens zwei Abstandselemente 50 auf. Die Abstandselemente 50 sind gemäß dem Ausführungsbeispiel zwischen der Schelle 14 und der Isolierungsschicht 30 angeordnet. Die Abstandselemente 50 sind seitlich an den Wänden 6 des Gehäuses 1 aufnahmeraumseitig eingebracht.

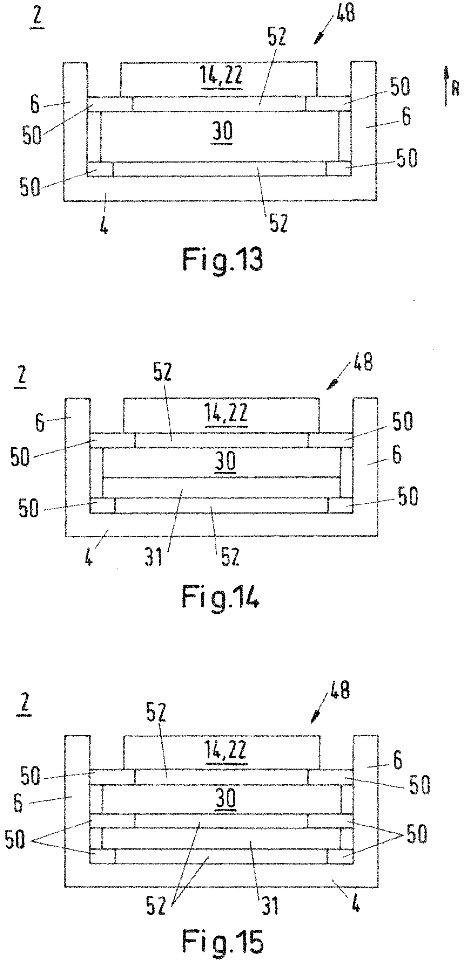

Eine isolierende Luftschicht 52 ist in der Fig. 12 zwischen der Umfangswand 4 und der Isolierungsschicht 30 durch entsprechend angeordnete Abstandselemente 50 umgesetzt. In der Fig. 13 sind zwei isolierende Luftschichten 52 in radialer Richtung R zwischen der Schelle 14 und der Isolierungsschicht 30 sowie zwischen der Isolierungsschicht 30 und dem Gehäuse 1 durch Abstandselemente 50 umgesetzt.

Die Fig. 14 und 15 zeigen Hitzeschutzeinrichtungen 2, welche zwei unterschiedliche Isolationsschichten 30, 31 aufweisen. Die erste Isolationsschicht 30 kann hierbei ein anders Material als die zweite Isolationsschicht 31 aufweisen. Die Isolationsschichten 30, 31 können miteinander verbunden oder durch eine Luftschicht 52 voneinander getrennt sein.

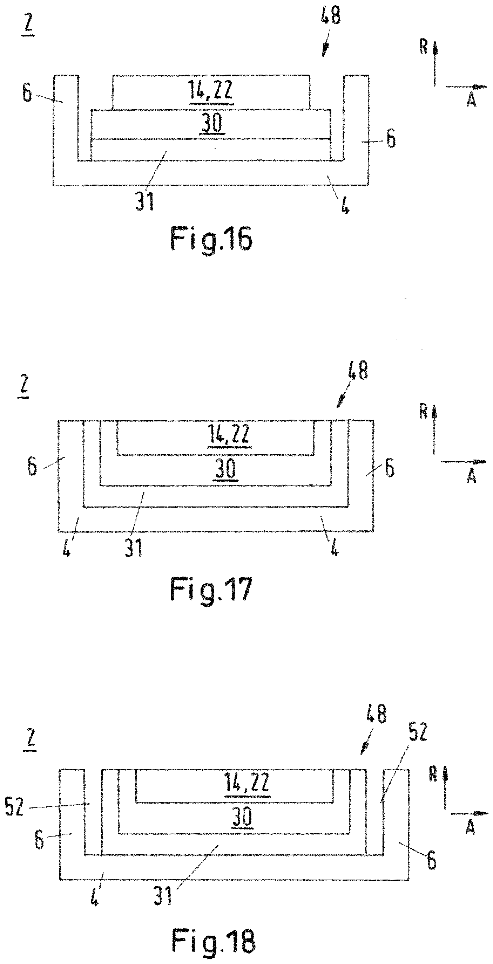

Die Fig. 16 zeigt ein der Fig. 10 entsprechendes Ausführungsbeispiel der Hitzeschutzeinrichtung 2, wobei hier zwei Isolationsschichten 30, 31 eingesetzt werden, welche unmittelbar miteinander und der Schelle 14 verbunden sind. Beispielsweise können die Isolationsschichten 30, 31 mit dem Gehäuse 1 und der Schelle 14 verklebt sein.

In den Fig. 17 und 18 weisen die Isolationsschichten 30, 31 nicht nur eine flächige Ausdehnung in axialer Richtung A, sondern umgreifen die Schelle 14 auch in radialer Richtung R abschnittsweise. Hierdurch bilden die Isolationsschichten 30, 31 ebenfalls analog zum Aufnahmeraum 48 eine U-Form aus. Hierdurch kann ein Wärmetransfer in axialer Richtung A von der Schelle 14 und zu der Schelle 14 unterbunden oder zumindest gedämpft werden.

Die Fig. 18 zeigt ein Beispiel, bei dem ein Luftspalt auch in axialer Richtung A zwischen den Isolationsschichten 30, 31 oder zwischen einer Isolationsschicht 31 und den Wänden 6 des Gehäuses 1 ausgebildet sein kann.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

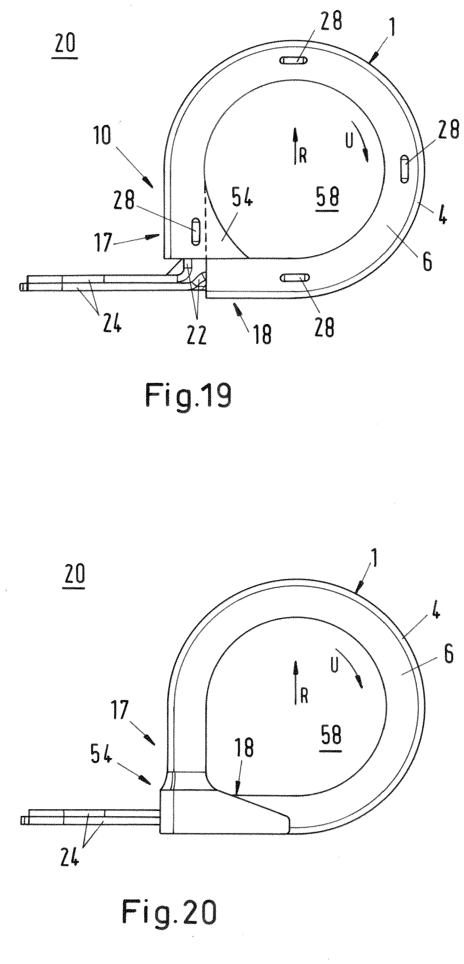

In der Fig. 19 ist eine Seitenansicht auf eine Schellenanordnung 20 mit einem Überlappungsabschnitt 54 gemäß einer Ausführungsform gezeigt. Der Überlappungsabschnitt 54 ist an einem ersten umfangsseitigen Ende 17 des Gehäuses 1 der Hitzeschutzeinrichtung 2 angeordnet und erstreckt sich in radialer Richtung R in einen Aufnahmeabschnitt 58 der Schellenanordnung 20. In dem Aufnahmeabschnitt 58 kann beispielsweise eine Komponente, ein Rohr, ein Schlauch und dergleichen aufgenommen bzw. befestigt werden.

Der Überlappungsabschnitt 54 ist entsprechend der Schellenanordnung 20 abgerundet geformt und folgt vorzugsweise der Form des Aufnahmeabschnitts 58. Somit kann eine durchgängige Auflagefläche der Hitzeschutzeinrichtung 2 im Aufnahmeabschnitt 58 bereitgestellt werden.

Insbesondere ist die Schellenanordnung 20 in einem zusammengebauten Zustand dargestellt, in welchem der Überlappungsabschnitt 54 den zweiten endseitigen Abschnitt 18 des Gehäuses 1 einseitig kontaktiert und somit Unterbrechungen in der Hitzeschutzeinrichtung 2 verhindert. Der zweite endseitige Abschnitt 18 des Gehäuses 1 bildet hierbei in Umfangsrichtung U ein zweites Ende des Gehäuses 1 der Hitzeschutzeinrichtung 2 aus.

Die Fig. 20 zeigt eine Seitenansicht auf eine Schellenanordnung 20 mit einem Überlappungsabschnitt 54 gemäß einer weiteren Ausführungsform. Im Unterschied zum in der Fig. 19 dargestellten Ausführungsbeispiel, ist hier der Überlappungsabschnitt 54 derart geformt, dass er in axialer Richtung A den zweiten endseitigen Abschnitt 18 des Gehäuses 1 zumindest axial einseitig überlagert.

Im dargestellten Ausführungsbeispiel verlängert der Überlappungsabschnitt 54 das erste Ende 55 des Gehäuses 1 in Umfangsrichtung U.

Bevorzugterweise kann der Überlappungsabschnitt 54 den zweiten endseitigen Abschnitt 18 des Gehäuses 1 axial beidseitig überlappen oder den zweiten endseitigen Abschnitt 18 des Gehäuses 1 zumindest bereichsweise umgreifen. Hierdurch kann beispielsweise auch ein Verrutschen der Hitzeschutzeinrichtung 2 im Verbindungsbereich zwischen dem ersten endseitigen Abschnitt 17 und dem zweiten endseitigen Abschnitt 18 verhindert werden.

### Bezugszeichenliste

- 1: Gehäuse
- 2: Hitzeschutzeinrichtung
- 4: Umfangswand
- 6: Wand / Seitenwand
- 8: Abschnitt
- 10: verlängerter Abschnitt
- 12: Aussparung
- 14: Schelle
- 16: Verschlussabschnitt
- 17: erster endseitiger Abschnitt des Gehäuses
- 18: zweiter endseitiger Abschnitt des Gehäuses
- 20: Schellenanordnung
- 22: Schellenband
- 24: Spanneinrichtung
- 26: Rastnut des Gehäuses
- 28: Rastnase der Schelle
- 30: Isolationsschicht / erste Isolationsschicht
- 31: zweite Isolationsschicht
- 32: Gehäuseschelle
- 34: Schellenband der Gehäuseschelle
- 36: Spanneinrichtung der Gehäuseschelle
- 38: Spannschraube der Gehäuseschelle
- 40: Schweißpunkt / Verbindungspunkt
- 42: Ausbeulung
- 44: Führungsabschnitt
- 46: Führungstunnel
- 48: Aufnahmeraum
- 50: Abstandselement
- 52: Luftschicht
- 54: Überlappungsabschnitt
- 58: Aufnahmeabschnitts
- A: axiale Richtung
- D: Durchmesser der Hitzeschutzeinrichtung
- R: radiale Richtung
- U: Umfangsrichtung

## Patentansprüche

1. Schellenanordnung (20), aufweisend eine Schelle (14) mit einem Schellenband (22) und mit einer Spanneinrichtung (24) zum Spannen des Schellenbandes (22), und aufweisend eine Hitzeschutzeinrichtung (2) mit einem Gehäuse (1) und mit mindestens einer Isolierungsschicht (30), wobei das Gehäuse (1) an seinen axialen Stirnseiten jeweils eine in Abschnitte (8, 10) unterteilte und radial nach innen ragende Wand (6) aufweist, wobei die mindestens eine Isolierungsschicht (30) zwischen den Wänden (6) des Gehäuses (1) positionierbar ist, wobei die Schelle (14) durch das Gehäuse (1) und/oder die mindestens eine Isolierschicht (30) der Hitzeschutzeinrichtung (2) zumindest bereichsweise umgreifbar ist, wobei die Hitzeschutzeinrichtung (2) formschlüssig mit der Schelle (14) verbunden ist, wobei die Hitzeschutzeinrichtung (2) zum Herstellen der formschlüssigen Verbindung mit der Schelle (14) biegbar ausgeführt ist, **dadurch gekennzeichnet, dass** zumindest ein Abschnitt der Wände (6) des Gehäuses (1) der Hitzeschutzeinrichtung (2) länger ausgestaltet ist als die übrigen Abschnitte der Wände (6), wobei der verlängerte Abschnitt eine entlang einer Linie umbiegbare Haltezunge ausbildet.

2. Schellenanordnung nach Anspruch 1, wobei die Hitzeschutzeinrichtung (2) eine mit dem Gehäuse (1) verbindbare Gehäuseschelle (32) zum Verbinden der Hitzeschutzeinrichtung (2) mit der Schelle (14) aufweist.

3. Schellenanordnung nach Anspruch 2, wobei die Gehäuseschelle (32) mit dem Gehäuse (1) durch mindestens einen Schweißpunkt, Rastverbindung, Stanzpunkt und/oder mindestens einen Durchsetzfügepunkt verbunden ist.

4. Schellenanordnung nach einem der vorangehenden Ansprüche, wobei das Gehäuse (1) an seiner radial äußeren Seite (4) mindestens einen Führungsabschnitt (46) zum Aufnehmen und Führen eines Schellenbands (34) der Gehäuseschelle (32) aufweist.

5. Schellenanordnung nach einem der Ansprüche 1 bis 4, wobei die Hitzeschutzeinrichtung (2) mindestens ein Abstandselement (50) aufweist, wobei das Abstandselement (50) als eine Lasche, eine Wulst und/oder als eine Materialeinlage ausgestaltet ist.

6. Schellenanordnung nach Anspruch 5, wobei das mindestens eine Abstandselement (50) an der Schelle (14) und/oder an dem Gehäuse (1) und/oder an mindestens einer Isolierschicht (30, 31) anbringbar ist.

7. Schellenanordnung nach Anspruch 5 oder 6, wobei durch das mindestens eine Abstandselement (50) mindestens ein Luftspalt (52) in radialer Richtung (R) zwischen der Schelle (14) und mindestens einer Isolierschicht (30), zwischen der mindestens einen Isolierschicht (30) und einer Innenseite (4) des Gehäuses (1), zwischen zwei Isolierschichten (30, 31) und/oder in axialer Richtung (A) zwischen der Schelle (14) und den Wänden (6) des Gehäuses (1), zwischen der mindestens einen Isolierschicht (30, 31) und den Wänden (6) des Gehäuses (1) und/oder zwischen den zwei Isolierschichten (30, 31) ausbildbar ist.

8. Schellenanordnung nach einem der Ansprüche 1 bis 7, wobei die Hitzeschutzeinrichtung (2) mindestens eine Ausbeulung (42) zum Aufnehmen der Spanneinrichtung (24) der Schelle (14) aufweist.

9. Schellenanordnung nach einem der Ansprüche 1 bis 8, wobei die Hitzeschutzeinrichtung (2) zumindest einen endseitig am Gehäuse (1) angeordneten Überlappungsabschnitt (54) aufweist, wobei der Überlappungsabschnitt (54) dazu eingerichtet ist, im zusammengebauten Zustand der Schellenanordnung (20) einen zweiten endseitigen Abschnitt (18) des Gehäuses (1) zu überdecken und/oder zu berühren.

## Claims

1. Clamp assembly (20), having a clamp (14) with a clamping band (22) and with a clamping device (24) for clamping the clamping band (22), and having a heat protection device (2) with a housing (1) and with at least one insulation layer (30), wherein the housing (1) has at the axial end faces thereof a respective wall (6) which is subdivided into portions (8, 10) and which protrudes radially inwards, wherein the at least one insulation layer (30) can be positioned between the walls (6) of the housing (1), wherein the clamp (14) can be engaged around at least in certain regions by the housing (1) and/or the at least one insulation layer (30) of the heat protection device (2), wherein the heat protection device (2) is connected to the clamp (14) in a positive-locking manner, wherein the heat protection device (2) is configured to be able to be bent in order to produce the positive-locking connection to the clamp (14), **characterized in that** at least one portion of the walls (6) of the housing (1) of the heat protection device (2) is configured to be longer than the remaining portions of the walls (6), wherein the extended portion forms a retention tongue which can be bent over along a line.

2. Clamp assembly according to Claim 1, wherein the heat protection device (2) has a housing clamp (32) which can be connected to the housing (1) in order to connect the heat protection device (2) to the clamp (14).

3. Clamp assembly according to Claim 2, wherein the housing clamp (32) is connected to the housing (1) by means of at least one welding location, locking connection, punching location and/or at least one clinching location.

4. Clamp assembly according to one of the preceding claims, wherein the housing (1) has at the radially outer side (4) thereof at least one guiding portion (46) for receiving and guiding a clamping band (34) of the housing clamp (32).

5. Clamp assembly according to one of Claims 1 to 4, wherein the heat protection device (2) has at least one spacer element (50), wherein the spacer element (50) is configured as a flap, a bead and/or as a material insert.

6. Clamp assembly according to Claim 5, wherein the at least one spacer element (50) can be fitted to the clamp (14) and/or to the housing (1) and/or to at least one insulation layer (30, 31).

7. Clamp assembly according to Claim 5 or 6, wherein, as a result of the at least one spacer element (50), at least one air gap (52) can be formed in a radial direction (R) between the clamp (14) and at least one insulation layer (30), between the at least one insulation layer (30) and an inner side (4) of the housing (1), between two insulation layers (30, 31) and/or in an axial direction (A) between the clamp (14) and the walls (6) of the housing (1), between the at least one insulation layer (30, 31) and the walls (6) of the housing (1) and/or between the two insulation layers (30, 31).

8. Clamp assembly according to one of Claims 1 to 7, wherein the heat protection device (2) has at least one protuberance (42) for receiving the clamping device (24) of the clamp (14).

9. Clamp assembly according to one of Claims 1 to 8, wherein the heat protection device (2) has at least one overlapping portion (54) which is arranged on the housing (1) at the end, wherein the overlapping portion (54) is configured, in the assembled state of the clamp assembly (20), to cover and/or to touch a second end portion (18) of the housing (1).

## Revendications

1. Agencement de collier (20), présentant un collier (14) pourvu d'une bande de collier (22) et d'un dispositif de serrage (24) pour serrer la bande de collier (22), et présentant un dispositif de protection thermique (2) pourvu d'un boîtier (1) et d'au moins une couche isolante (30), dans lequel le boîtier (1) présente sur ses faces frontales axiales respectivement une paroi (6) divisée en sections (8, 10) et faisant saillie radialement vers l'intérieur, dans lequel ladite au moins une couche isolante (30) peut être positionnée entre les parois (6) du boîtier (1), dans lequel le collier (14) peut être saisi au moins par endroits par le boîtier (1) et/ou ladite au moins une couche isolante (30) du dispositif de protection thermique (2), dans lequel le dispositif de protection thermique (2) est relié au collier (14) par complémentarité de forme, dans lequel le dispositif de protection thermique (2) est réalisé de manière flexible pour établir la liaison par complémentarité de forme avec le collier (14),
**caractérisé en ce qu'**au moins une section des parois (6) du boîtier (1) du dispositif de protection thermique (2) est configurée plus longue que les autres sections des parois (6), dans lequel la section prolongée réalise une languette de retenue repliable le long d'une ligne.

2. Agencement de collier selon la revendication 1, dans lequel le dispositif de protection thermique (2) présente un collier de boîtier (32) pouvant être relié au boîtier (1) pour relier le dispositif de protection thermique (2) au collier (14).

3. Agencement de collier selon la revendication 2, dans lequel le collier de boîtier (32) est relié au boîtier (1) par au moins un point de soudure, une liaison par encliquetage, un point d'emboutissage et/ou au moins un point d'interpénétration.

4. Agencement de collier selon l'une quelconque des revendications précédentes, dans lequel le boîtier (1) présente sur sa face radialement extérieure (4) au moins une section de guidage (46) pour recevoir et guider une bande de collier (34) du collier de boîtier (32) .

5. Agencement de collier selon l'une quelconque des revendications précédentes 1 à 4, dans lequel le dispositif de protection thermique (2) présente au moins un élément d'écartement (50), dans lequel l'élément d'écartement (50) est configuré sous la forme d'une languette, d'un bourrelet et/ou d'un insert de matière.

6. Agencement de collier selon la revendication 5, dans lequel ledit au moins un élément d'écartement (50) peut être rattaché au collier (14) et/ou au boîtier (1) et/ou à au moins une couche isolante (30, 31).

7. Agencement de collier selon la revendication 5 ou 6, dans lequel ledit au moins un élément d'écartement (50) permet de réaliser au moins un entrefer (52) dans la direction radiale (R) entre le collier (14) et au moins une couche isolante (30), entre ladite au moins une couche isolante (30) et une face intérieure (4) du boîtier (1), entre deux couches isolantes (30, 31) et/ou dans la direction axiale (A) entre le collier (14) et les parois (6) du boîtier (1), entre ladite au moins une couche isolante (30, 31) et les parois (6) du boîtier (1) et/ou entre les deux couches isolantes (30, 31) .

8. Agencement de collier selon l'une quelconque des revendications 1 à 7, dans lequel le dispositif de protection thermique (2) présente au moins une protubérance (42) pour recevoir le dispositif de serrage (24) du collier (14).

9. Agencement de collier selon l'une quelconque des revendications 1 à 8, dans lequel le dispositif de protection thermique (2) présente au moins une partie de chevauchement (54) disposée sur le boîtier (1) côté extrémité, dans lequel la partie de chevauchement (54) est aménagée pour couvrir et/ou toucher à l'état assemblé de l'agencement de collier (20) une deuxième section (18) côté extrémité du boîtier (1).
